# EUROPÄISCHE PATENTSCHRIFT

(11) **EP 3 019 903 B1**
(45) Veröffentlichungstag und Bekanntmachung des Hinweises auf die Patenterteilung: **15.01.2020**
(21) Anmeldenummer: 14738799.7
(22) Anmeldetag: 08.07.2014
(51) Int. Cl.: G02B 21/00, G02B 21/16, G02B 21/34, G02B 21/36

(54) **ANORDNUNG ZUR LICHTBLATTMIKROSKOPIE**
ARRANGEMENT FOR LIGHT SHEET MICROSCOPY
SYSTÈME DE MICROSCOPIE À FEUILLE DE LUMIÈRE

(30) Priorität: 10.07.2013 DE 102013107298
(43) Veröffentlichungstag der Anmeldung: 18.05.2016
(73) Patentinhaber: Carl Zeiss Microscopy GmbH, 07745 Jena (DE)
(72) Erfinder: SIEBENMORGEN, Jörg, 07743 Jena (DE); KALKBRENNER, Thomas, 07745 Jena (DE); LIPPERT, Helmut, 07745 Jena (DE)
(74) Vertreter: Loritz, Rainer
(86) Internationale Anmeldenummer: PCT/EP2014/064550
(87) Internationale Veröffentlichungsnummer: WO 2015/004107

(56) Entgegenhaltungen:
- EP-A1- 2 587 295
- WO-A2-2012/122027
- DE-A1-102007 015 061
- REYNAUD E G ET AL: "Light sheet-based fluorescence microscopy: more dimensions, more photons, and less photodamage", H F S P JOURNAL: FRONTIERS OF INTERDISCIPLINARY RESEARCH IN THE LIFE SCIENCES, INTERNATIONAL HUMAN FRONTIER SCIENCE PROGRAM ORGANIZATION, FR, Bd. 2, Nr. 5, 1. Oktober 2008 (2008-10-01) , Seiten 266-275, XP008129341, ISSN: 1955-2068
- JÃ HRLING N ET AL: "Ultramicroscopy â a novel light sheet based imaging technique created by various research disciplines ; Ultramikroskopie â eine neue bildgebende Technologie auf Basis von Laser Light-Sheets, entwickelt in Zusammerarbeit mehrerer Forschungsdisziplinen", E & I ELEKTROTECHNIK UND INFORMATIONSTECHNIK, SPRINGER-VERLAG, VIENNA, Bd. 128, Nr. 10, 1. Oktober 2011 (2011-10-01), Seiten 352-358, XP019983407, ISSN: 1613-7620, DOI: 10.1007/S00502-011-0045-1

## Beschreibung

Die Erfindung betrifft eine Anordnung zur Lichtblattmikroskopie. Eine solche Anordnung umfasst ein Probengefäß zur Aufnahme einer in einem Medium befindliche Probe, wobei das Probengefäß hinsichtlich einer ebenen, meist horizontalen Bezugsfläche ausgerichtet ist. Die Anordnung umfasst außerdem eine Beleuchtungsoptik mit einem Beleuchtungsobjektiv, die eingerichtet ist, die Probe mit einem Lichtblatt zu beleuchten, wobei die optische Achse des Beleuchtungsobjektivs und das Lichtblatt in einer Ebene liegen, die mit der Normalen der Bezugsfläche einen von Null verschiedenen Beleuchtungswinkel β einschließt. Schließlich umfasst die Anordnung zur Lichtblattmikroskopie auch eine Detektionsoptik mit einem Detektionsobjektiv, dessen optische Achse mit der Normalen der Bezugsfläche einen von Null verschiedenen Detektionswinkel δ einschließt. Beleuchtungsobjektiv und Detektionsobjektiv können dabei auch als sogenanntes Doppelobjektiv ausgestaltet sein, wie es beispielsweise in der EP 0 866 993 B1 beschrieben ist. Beide Objektive sind dann in einer gemeinsamen Baueinheit zusammengefasst, die jeweiligen Optiken - d.h. Objektive mit zugehörigen Strahlengängen und darin angeordneten optischen Elementen - teilen sich dann einige Elemente.

Eine solche Anordnung wird insbesondere bei der Untersuchung von biologischen Proben eingesetzt, bei der die Beleuchtung der Probe mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung, die in der Regel der optischen Achse des Detektionsobjektivs entspricht, einen rechten Winkel ein. Mit dieser auch als SPIM (***S**elective **P**lane **I**llumination **M**icroscopy*) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, wo sie dann auch als LSFM (***L**ight **S**heet **F**luorescence **M**icroscopy*) bezeichnet wird. Gegenüber anderen etablierten Verfahren, wie der konfokalen Laser-Scanning-Mikroskopie oder der Zwei-Photonen-Mikroskoskopie weist die LSFM-Technik mehrer Vorzüge auf: Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Proben bei diesem Verfahren am geringsten, was u.a. die Gefahr des Ausbleichens einer Probe reduziert, da die Probe nur durch ein dünnes Lichtblatt in einem von Null verschiedenen Winkel zur Detektionsrichtung beleuchtet wird.

Statt ein rein statisches Lichtblatt zu verwenden, kann auch ein quasi-statisches Lichtblatt erzeugt werden, indem die Probe mit einem Lichtstrahl schnell abgetastet wird. Die lichtblattartige Beleuchtung entsteht, indem der Lichtstrahl einer sehr schnellen Relativbewegung zu der zu beobachteten Probe unterworfen wird und dabei zeitlich aufeinanderfolgend mehrfach aneinandergereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit 2D-Array kann auch ein Zeilensensor in Kombination mit einem erneuten Abtasten (*Rescan*) in der Detektionsoptik verwendet werden. Die Detektion kann außerdem auch konfokal erfolgen.

Die SPIM-Technik ist in der Literatur inzwischen vielfach beschrieben, beispielsweise in der DE 102 57 423 A1 und der darauf aufbauenden WO 2004/053558 A1 sowie in den Übersichtsartikel *"*Selective Plane Illumination Microscopy Techniques in Developmental Biology" von J. Huisken et al., erschienen im Jahr 2009 in der Zeitschrift Development Bd. 136, S. 1963.

Eine der Hauptanwendungen der Lichtblattmikroskopie liegt in der Bildgebung mittelgroßer Organismen mit einer Größe von einigen 100 µm bis hin zu wenigen mm. In der Regel werden diese Organismen in ein Agarose-Gel eingebettet, welches sich wiederum in einer Glaskapillare befindet. Die Glaskapillare wird von oben bzw. von unten in eine mit Wasser gefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjektiv, das senkrecht zum Lichtblatt und damit auch senkrecht zur Lichtblattoptik steht, auf eine Kamera abgebildet.

Diese Methode der Lichtblattmikroskopie hat drei große Nachteile. Zum einen sind die zu untersuchenden Proben relativ groß, sie stammen aus der Entwicklungsbiologie. Außerdem ist aufgrund der Probenpräparation und der Abmessungen der Probenkammer das Lichtblatt relativ dick und somit die erzielbare axiale Auflösung eingeschränkt. Zusätzlich ist die Probenpräparation aufwendig und nicht kompatibel zu Standard-Probenpräparationen und Standard-Probenhalterungen, wie sie in der Fluoreszenzmikroskopie für einzelne Zellen üblicherweise eingesetzt werden.

Um diese Einschränkungen zumindest teilweise umgehen zu können, wurde in den letzten Jahren ein SPIM-Aufbau entwickelt, bei dem das Beleuchtungsobjektiv und das Detektionsobjektiv senkrecht zueinander stehen und jeweils unter einem Winkel von 45° von oben auf die Probe gerichtet sind. Zieht man als Bezugsfläche beispielsweise den Probentisch, auf dem die Probenhalterung fixiert ist, oder eine andere horizontale Ebene heran, so betragen Beleuchtungswinkel β und Detektionswinkel δ jeweils 45°. Ein solcher Aufbau wird beispielsweise in der WO 2012/110488 A2 und in der WO 2012/122027 A2 beschrieben.

Bei einem solchen Aufbau befindet sich die Probe beispielsweise auf dem Boden einer Petrischale. Die Petrischale ist mit Wasser gefüllt, Beleuchtungsobjektiv und Detektionsobjektiv werden in die Flüssigkeit, die auch die Funktion eines Immersionsmediums übernimmt, eingetaucht. Diese Herangehensweise bietet den Vorteil einer höheren Auflösung in axialer Richtung, da ein dünneres Lichtblatt erzeugt werden kann. Aufgrund der höheren Auflösung können auch kleinere Proben untersucht werden. Auch ist die Probenpräparation bedeutend einfacher geworden. Der große Nachteil besteht weiterhin darin, dass sowohl die Probenpräparation als auch die Probenhalterung noch nicht dem erwähnten Standard entsprechen. So muss die Petrischale relativ groß sein, damit die beiden Objektive in die Schale eingetaucht werden können, ohne an den Rand der Schale anzustoßen. Mikrotiterplatten - auch als *Multi*-*Well-*Platten bezeichnet -, die Standard in vielen Bereichen der Biologie und bei der fluoreszenzmikroskopischen Analyse einzelner Zellen sind, können mit diesem Verfahren nicht verwendet werden, da die Objektive nicht in die sehr kleinen Vertiefungen der Platte eintauchen können. Außerdem hat dieses Verfahren den Nachteil, dass eine Analyse vieler Proben in kürzester Zeit (*High-Throughput-Screening*) nicht ohne weiteres möglich ist, da die Objektive beim Wechseln der Probe gereinigt werden müssen, um Kontaminierungen der verschiedenen Proben zu vermeiden.

Eine Anordnung zur Lichtblattmikroskopie ist in der Publikation von Reynaud et al. (Reynaud, E. G. et al., 2008: Light sheet-based fluorescence microscopy: more dimensions, more photons, and less photodamage; HFSP Journal 2: 266-275) offenbart. Ein Probengefäß zur Aufnahme einer in einem Medium befindlichen Probe weist eine Abdeckung auf. Es ist eine Beleuchtungsoptik zur Beleuchtung der Probe mit einem Lichtblatt vorhanden, wobei die optische Achse der Beleuchtungsoptik und das Lichtblatt in einer Ebene liegen, die mit der Normalen einer Bezugsfläche einen von Null verschiedenen Beleuchtungswinkel β einschließt. Die optische Achse einer ebenfalls vorhandenen Detektionsoptik schließt mit der Normalen der Bezugsfläche einen von Null verschiedenen Detektionswinkel ein. An der Abdeckung ist eine für Beleuchtungs- und Detektionslicht transparente Auswölbung mit einer inneren Grenzfläche und einer äußeren Grenzfläche zur Aufnahme der Probe in dieser Auswölbung ausgebildet.

Die Aufgabe der Erfindung besteht darin, eine Anordnung zur Lichtblattmikroskopie der eingangs beschriebenen Art dahingehend weiterzuentwickeln, dass eine Analyse von Proben mit einem hohen Durchsatz vereinfacht wird, indem die Verwendung von Mikrotiterplatten, d.h. von Probenhalterungen, die eine Vielzahl von Proben aufnehmen können, vereinfacht wird. Diese Aufgabe wird für eine Anordnung zur Lichtblattmikroskopie wie sie eingangs beschrieben wurde, dadurch gelöst, dass an der Abdeckung mindestens eine mindestens teilweise für Beleuchtungs- und Detektionslicht transparente Auswölbung zur Aufnahme der Probe ausgebildet ist, wobei die Auswölbung eine innere und eine äußere Grenzfläche aufweist. Auf diese Weise wird der Zugang der Objektive zur Probe wesentlich vereinfacht, insbesondere lassen sich Mikrotiterplatten - auch drehbare Mikrotiterplatten - verwenden, deren Vertiefungen dann mit geringeren lateralen Abmessungen konfiguriert werden können, als wenn die Probe am Gefäßboden lokalisiert ist, insbesondere wenn zur Analyse eine aufrechte Mikroskop-Konfiguration verwendet wird. Die mindestens eine Auswölbung umfasst zwei von der Abdeckung und vom Probengefäß abstehende plattenförmige Elemente mit parallelen Grenzflächen, welche an derjenigen Stelle der Auswölbung mit der größten Entfernung zum übrigen Probengefäß in mindestens einem Punkt in Kontakt stehen, wobei die Normalen der Grenzflächen eines ersten plattenförmigen Elements mit der optischen Achse des Beleuchtungsobjektivs und die Normalen der Grenzflächen eines zweiten plattenförmigen Elements mit der optischen Achse des Detektionsobjektivs zusammenfallen, und wobei die Summe von Beleuchtungswinkel β und Detektionswinkel δ 90° beträgt, was die Anordnung eines Detektors im Strahlengang erleichtert.

Dabei ist es wesentlich, die Form der Auswölbung, ihre Position bei der Beobachtung sowie die Lage der optischen Achsen von Beleuchtungs- und Detektionsobjektiv aufeinander abzustimmen, um Aberrationen, wie sie bei einem schräg durch die Grenzflächen verlaufenden Strahlengang und damit schrägen Lichteinfall und Lichtaustritt aus dem Probengefäß verbunden wären, zu vermeiden bzw. zu minimieren. Die Abstimmung erfolgt in der Weise, dass die optischen Achsen des Beleuchtungs- und des Detektionsobjektivs mit den Normalen der inneren und der äußeren Grenzflächen zumindest im Bereich des Durchtritts der optischen Achsen durch die Grenzflächen einen minimalen Winkel einschließen, d.h. einen Winkel, der Null beträgt oder nur um wenige, etwa bis zu 5° Grad abweicht. Stehen optische Achsen und die Grenzflächen senkrecht aufeinander, so treten nur sphärische Aberrationen auf, die wie bei bekannten, an Deckgläser angepasste Mikroskopobjektiven korrigiert werden können.

Die mindestens eine Auswölbung umfasst zwei von der Abdeckung und dem Probengefäß abstehende plattenförmige Elemente mit parallelen Grenzflächen, welche an derjenigen Stelle der Auswölbung mit der größten Entfernung zum übrigen Probengefäß - bei einer als Senke ausgebildeten Auswölbung ist das die tiefste Stelle der Senke, bei einer als Erhebung ausgebildeten Auswölbung die höchste Stelle der Erhebung - stehen in mindestens einem Punkt in Kontakt und schließen an diesem Punkt die Senke oder die Erhebung bzw. das Probengefäß oder den Gefäßdeckel nach unten bzw. oben ab. Die Normalen der Grenzflächen des ersten plattenförmigen Elements fallen dabei im Bereich des Durchtritts der optischen Achse des Beleuchtungsobjektivs mit dieser zusammen in dem Sinne, dass die Normalen und die optische Achse an jeder Stelle der Grenzflächen des plattenförmigen Elements parallel zu der optischen Achse des Beleuchtungsobjektivs sind. Entsprechend fallen die Normalen der Grenzflächen des zweiten plattenförmigen Elements mit der optischen Achse des Detektionsobjektivs zusammen, sind also an jeder Stelle der Grenzflächen des zweiten plattenförmigen Elements parallel zu dieser. Dies erlaubt eine höhere Flexibilität in der Abstimmung hinsichtlich der Position der Auswölbung in Bezug auf die beiden Objektive. Die Plattenform, die eine parallele Lage der inneren und der äußeren Grenzfläche zueinander impliziert, ist jedoch nicht zwingend und insbesondere in dem Bereich, wo die beiden plattenförmigen Elemente in Kontakt stehen, kann dieser Bereich auf der Innenseite mit einer kleinen Wölbung versehen sein, so dass beispielsweise bei einer Senke zum einen an deren tiefsten Punkt diese in ihrer Festigkeit verstärkt wird und zum anderen auch ein hartnäckiges Anhaften von Verunreinigungen verhindert wird, wie es bei zwei in einem Winkel zusammenstoßenden, ebenen Platten, d.h. bei einer Senke mit zumindest teilweisem V-förmigen Querschnitt der Fall wäre.

Die mindestens eine Auswölbung kann rinnenförmig ausgestaltet sein, wobei im Probengefäß beispielsweise im Gefäßboden mehrere Rinnen hintereinander angeordnet sein können. In einer besonders bevorzugten Ausgestaltung ist die Auswölbung pyramidenförmig ausgestaltet, so dass die beiden plattenförmigen Elemente Dreiecksform haben und durch zwei weitere plattenförmige Elemente ergänzt werden. Dies ermöglicht eine Analyse einer Probe, die in der Auswölbung lokalisiert ist, von vier verschiedenen Seiten, was von Vorteil sein kann, wenn die Probe an einer Seite angelagert ist. Zudem lassen sich pyramidenförmige Auswölbungen rasterförmig am Gefäßboden oder im Gefäßdeckel anordnen, so dass das Probengefäß auch als Mikrotiterplatte mit einer Vielzahl von solchen pyramidenförmigen Auswölbungen ausgestaltet sein kann. Auch die rinnenförmige Ausgestaltung lässt sich für die Gestaltung einer Mikrotiterplatte verwenden, wenn die einzelnen Rinnen jeweils durch Trennelemente wie Streben in einzelne Abschnitte unterteilt werden.

Ein Probengefäß mit einer solchen Senke lässt sich aus Glas, bevorzugt aber in einer preiswerteren Variante aus Kunststoff fertigen, beispielsweise im Tiefziehverfahren, wenn die Senke rinnenförmig ist.

Zweckmäßig ist mindestens ein Teil der inneren Grenzfläche der Auswölbung zum Aufwachsen von Zellen auf dieser Grenzfläche funktionalisiert, d.h. mit einer speziellen Struktur beschichtet, an die sich die Oberflächenstrukturen der Zellen anbinden und sich dort verankern. Für einzelne Zellen, die mit der vorliegenden lichtblattmikroskopischen Anordnung in hohem Durchsatz analysiert werden sollen, lassen sich die Wachstumsbedingungen noch besser an eine natürliche Wachstumsumgebung anpassen, in dem die mindestens eine Auswölbung, also beispielsweise eine Rinne oder pyramidenförmige Senke, mit einem Gel oder Alginat gefüllt ist, mit denen eine räumliche Matrix nachgebildet werden kann.

Wie bereits angedeutet, ist in einer bevorzugten Ausgestaltung, bei der Beleuchtungsobjektiv und Detektionsobjektiv in einer inversen Konfiguration unterhalb des Probengefäßes angeordnet sind, die Abdeckung als Gefäßboden und die Auswölbung als Senke im Gefäßboden ausgebildet. Auf diese Weise wird der Zugang der Objektive zur Probe wesentlich vereinfacht, insbesondere lassen sich auch Mikrotiterplatten mit einer Vielzahl von Vertiefungen verwenden, wobei an jeder dieser Vertiefungen eine Senke für eine Probe ausgebildet ist. Die Verwendung einer Senke bzw. von Senken für die Untersuchung vieler Zellproben ermöglicht es, die Anzahl der Vertiefungen in einem Probengefäß zu erhöhen da die lateralen Ausdehnungen - in der Ebene der Bezugsfläche - verringert werden können.

Anstelle des Gefäßbodens kann für eine aufrechte Konfiguration des Lichtblattmikroskops - also für eine Beobachtung von oben - als Abdeckung auch der Gefäßdeckel in analoger Weise wie für den Gefäßboden beschrieben, angepasst und die Analyse der Zellen mit einer aufrechten Lichtblattmikroskopie-Anordnung vorgenommen werden. Bei dieser Ausgestaltung der Erfindung sind daher Beleuchtungs- und Detektionsobjektiv oberhalb des Probengefäßes angeordnet. Im Gefäßdeckel ist dann anstatt einer Senke mindestens eine Erhebung ausgebildet. Die Form der Erhebung, ihre Position bei der Beobachtung sowie die Lage der optischen Achse von Beleuchtungs- und Detektionsobjektiv sind dann ebenfalls aufeinander abgestimmt, indem die optischen Achsen des Beleuchtungs- und des Detektionsobjektivs mit den Normalen der Grenzflächen zumindest im Bereich des Durchtritts der optischen Achsen durch die Grenzflächen einen minimalen Winkel einschließen. Die Erhebungen können wie die Senken beispielsweise rinnen-, pyramiden- sein.

Da bei Mikrotiterplatten die Probe gewöhnlich der Schwerkraft folgend in die Tiefe absinkt bzw. an der tiefsten Stelle abgelegt wird, ist eine Beobachtung, nicht ohne weiteres möglich, wenn Beleuchtungs- und Detektionsobjektiv oberhalb des Probengefäßes angeordnet sind. Aus diesem Grund sind im Probengefäß, wenn die Erhebungen im Gefäßdeckel ausgebildet sind, zusätzlich Mittel zur Positionierung der Probe im oberen Bereich des Probengefäßes, bezogen auf seine Tiefe, innerhalb des Arbeitsabstandes der Objektive angeordnet. Die Mittel zur Positionierung können auch im Gefäßdeckel angeordnet sein, entsprechend ebenfalls innerhalb des Arbeitsabstandes der Objektive. Der Arbeitsabstand für typische Objektive mit hoher numerischer Apertur liegt üblicherweise in einem Bereich von wenigen 100 µm bis zu einigen mm.

Senken wie Erhebungen können aus plattenförmigen Elementen zusammengesetzt sein, die inneren Grenzflächen können funktionalisiert sein. Eine weitere Möglichkeit der Ausgestaltung des Probengefäßes besteht darin, eine drehbare Mikrotiterplatte zu verwenden, bei der zunächst die Erhebungen im Deckel nach unten zeigen. In diese Erhebung, die in der Bestückungsposition einer Senke entspricht, wird die Probe eingebracht und dort mit den Mitteln zur Positionierung der Probe in der mindestens einen Erhebung fixiert, beispielsweise durch einen Stempel. Anschließend wird von oben der Boden auf die drehbare Mikrotiterplatte gesetzt und diese verschlossen. Zur Analyse wird diese dann gedreht, wenn sie mit einem aufrechten Lichtblattmikroskop verwendet werden soll. Eine Drehung ist nicht erforderlich, wenn sie mit einem inversen Lichtblattmikroskop verwendet werden soll.

Die Mittel zur Positionierung der Probe im oberen Viertel oder in der mindestens einen Erhebung im Gefäßdeckel umfassen zweckmäßig eine für Nährlösungen permeable Membran, eine Plattform mit einer Vielzahl von Öffnungen, oder einen Steg. Wichtig ist, dass die Probe in jedem Fall Kontakt zur Nährlösung hat, wobei sie jedoch nicht aufgrund der Schwerkraft in diese absinken darf. Die Membran, die Plattform oder der Steg können auch aus einem Gel gefertigt sein.

Aufgrund der Tatsache, dass das Licht zwischen jedem Objektiv und der Probe jeweils drei verschiedene Medien durchläuft bzw. zwei Grenzflächen durchtritt, treten auch bei vertikaler Ausrichtung der Objektive in Bezug auf die Grenzflächen sphärische Aberrationen auf. Diese lassen sich bei bekanntem Material für die Auswölbung in Form einer Senke im Gefäßboden bzw. in Form einer Erhebung im Gefäßdeckel und bei bekannter Dicke zumindest für plattenförmige Elemente mit parallelen Grenzflächen so korrigieren, wie es auch üblicherweise für Mikroskopobjektive realisiert wird. Teilweise sind sie in Bezug auf eine vorgegebene Deckglasdicke aus einem vorgegebenen Material korrigiert. Solche Korrekturen sind besonders bevorzugt beim Detektionsobjektiv ausgeführt, welches in der Regel eine größere numerische Apertur aufweisen wird als das Beleuchtungsobjektiv.

In einer bevorzugten Ausgestaltung umfassen Beleuchtungsoptik und / oder Detektionsoptik nicht nur Korrekturmittel zur Verringerung von den o.g. Aberrationen, sondern auch von solchen, welche durch den Durchtritt von Beleuchtungs- und / oder zu detektierendem Licht unter einem von 90° verschiedenen Winkel durch die Grenzflächen entstehen.

Im Beleuchtungsobjektiv und / oder im Detektionsobjektiv sind daher bevorzugt spezielle Korrekturlinsen angeordnet, diese können auch - falls die Objektive mit den Normalen der Grenzflächen einen von Null verschiedenen Winkel einschließen - Zylinderlinsen, verkippte oder nicht auf den optischen Achsen angeordnete Linsen umfassen, auch Korrekturelemente mit asphärischen Flächen oder Freiformflächen lassen sich zur Korrektur verwenden. Alternativ oder in Ergänzung können im Beleuchtungsstrahlengang Korrekturmittel in Form von adaptiven optischen Elementen zur Manipulation der Phasenfronten des Beleuchtung- und / oder des Detektionslichts angeordnet sein. Dabei verwendet man bevorzugt verformbare Spiegel, räumliche Lichtmodulatoren oder Phasenplatten.

Ein weiterer Weg zur Verminderung der Aberrationen besteht in der Verwendung speziell angepasster Materialien für die Abdeckung bzw. die Erhebungen im Gefäßdeckel oder die Senken im Gefäßboden.

In einer besonders bevorzugten Ausführung werden als Material für die Senke bzw. die Erhebung im Gefäßboden bzw. im Gefäßdeckel solche Stoffe verwendet, die einen Brechungsindex aufweisen, welcher sich von dem Brechungsindex des Mediums, in welchem sich die Probe befindet, um weniger als 5% unterscheidet. Wenn als Medium, in welchem sich die Probe befindet, beispielsweise Wasser verwendet wird, welches eine Brechzahl n_{d} = 1,33 bei einer Wellenlänge λ_{d} = 578,56 nm hat, so eignet sich als Material für die Abdeckung beispielsweise PTFE (Polytetrafluorethylen, n_{d} = 1,35), CYTOP® (n_{d} = 1,34), oder PFEP (Perfluorethylenpropylen, n_{d} = 1,34) ist. Auch perfluorodioxolane Polymere lassen sich verwenden, deren Brechungsindex ebenfalls in der Regel zwischen 1,33 und 1,36 liegt. Ein besonders gut geeignetes Material ist auch Teflon® AF, welches üblicherweise einen Brechungsindex n_{d} = 1,32 aufweist. Bei diesem Material handelt es sich um ein amorphes Polymer, hier kann die Glasübergangstemperatur so eingestellt werden, dass das Polymer im erkalteten Zustand den Brechungsindex des Mediums, in welchem sich die Probe befindet, aufweist. Auch andere amorphe Polymere mit einstellbarer Glasübergangstemperatur lassen sich selbstverständlich verwenden.

Stimmen die Brechungsindizes nicht exakt überein, so treten weiterhin Aberrationen auf, wenn auch im verringertem Maße. Um diese Aberrationen weiter zu vermindern, sollte die Auswölbung daher so dünn wie möglich konfiguriert werden und nicht dicker als einige hundert µm sein. Dient die Abdeckung gleichzeitig als Boden des Probengefäßes, wie es bei einer inversen Anordnung der Fall ist, so muss selbstverständlich auf eine ausreichende Stabilität gegenüber dem von dem Medium, in welchem sich die Probe befindet, ausgeübten Druck geachtet werden. Dies ist bei einer Abdeckung als Deckel des Probengefäßes für eine aufrechte Beobachtung nicht erforderlich, hier kann das Material noch wesentlich dünner ausgeformt werden mit Dicken von weniger als 100 µm.

In einem weiteren Schritt, welcher insbesondere bei der aufrechten Lichtblattmikroskopie einfach zu realisieren ist, können wieder Immersionsobjektive verwendet werden. Wenn man als Immersionsmedium das gleiche Medium wie für die Aufnahme der Probe verwendet, also beispielsweise Wasser und die Brechungsindizes von Wasser und für die Erhebungen / Senken im Gefäßdeckel bzw. Gefäßboden ein Material verwendet wird, was einen fast identischen Brechungsindex zu Wasser aufweist, so machen sich die Grenzflächen nicht durch Streuung oder Brechung bemerkbar, die Objektive müssen dann nicht weiter korrigiert werden.

Als Material für die Erhebungen bzw. Senken im Gefäßdeckel und im Gefäßboden lässt sich auch ein nanostrukturiertes Mischmaterial aus einer ersten und einer zweiten Komponente verwenden, wobei der Brechungsindex der ersten Komponente kleiner und der Brechungsindex der zweiten Komponente größer als der Brechungsindex des Mediums zur Aufnahme der Probe ist. Ist dann die mittlere Strukturgröße aus dem Material der ersten Komponente kleiner als die Lichtwellenlängen des zur Beleuchtung verwendeten und des zu detektierenden Lichts, so ergibt sich ein effektiver Brechungsindex für das Mischmaterial, der in Abhängigkeit von der Größe der Bereiche und ihrer Zahl ebenfalls an den Brechungsindex des Mediums angepasst werden kann, so dass er in dem Bereich von 5% um den Brechungsindex des Mediums zur Einbettung der Probe liegt. Beispielsweise kann nanoporöses Siliziumdioxid verwendet werden, hier ist die erste Komponente Luft und die zweite Komponente Siliziumdioxid. Solcherart nanostrukturierte Materialien werden beispielsweise in dem Artikel "Optical thin-film materials with low refractive index for broadband elimination of Fresnel reflection" von J.-Q. Xi et al., erschienen im Jahre 2007 in Nature Photonics, Vol. 1, S.176-179 im Zusammenhang mit der Herstellung von Antireflexionsschichten beschrieben.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig.1: eine Anordnung zur Lichtblattmikroskopie,
- Fig.2: ein Beispiel für ein Probengefäß mit Senken,
- Fig.: in Beispiel für einen Gefäßdeckel oder Gefäßboden,
- Fig.4 a)-c): verschiedene Möglichkeiten, eine Probe im oberen Bereich einer Vertiefung einer Mikrotiterplatte anzuordnen, und
- Fig.5: die Verwendung einer drehbaren Mikrotiterplatte.

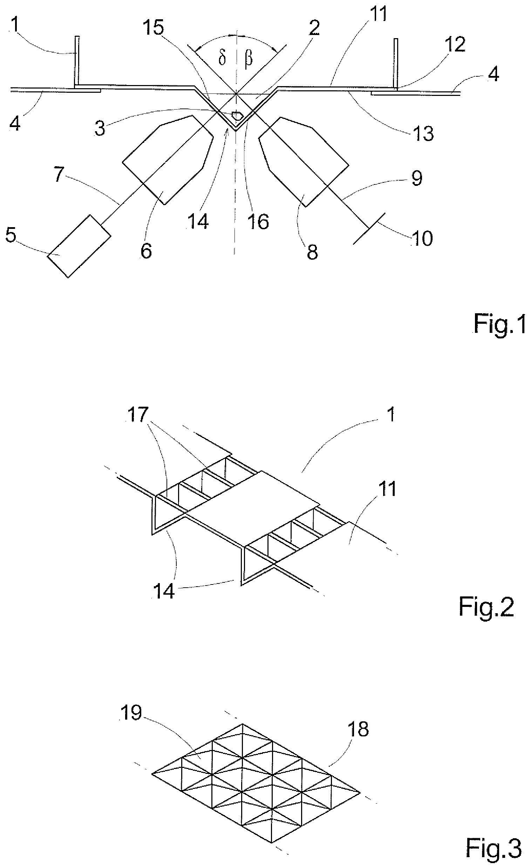

In Fig.1 ist zunächst der grundlegende Aufbau einer Anordnung zur Lichtblattmikroskopie gezeigt, welche einen leichten Zugang zu der zu untersuchenden Probe ermöglicht und damit die Voraussetzung für einen Einsatz bei Analysen einzelner Zellen mit hohem Durchsatz erfüllt. Die Anordnung ist hier als inverses Lichtblattmikroskop konfiguriert, lässt sich jedoch ohne weiteres auf ein aufrechtes Lichtblattmikroskop übertragen. In ein Probengefäß 1 befindet sich in einem Medium 2 eine Probe 3. Das Probengefäß 1 ist hinsichtlich einer ebenen Bezugsfläche ausgerichtet, welche hier durch die horizontale Oberfläche eines Probentisches 4 definiert wird. Die Anordnung umfasst außerdem eine Beleuchtungsoptik mit einer Lichtquelle 5 und einem Beleuchtungsobjektiv 6 zur Beleuchtung der Probe 3 mit einem Lichtblatt. Das Lichtblatt und die optische Achse 7 des Beleuchtungsobjektivs 6 liegen in einer Ebene, welche mit der Normalen der Bezugsfläche einen von Null verschiedenen Beleuchtungswinkel β einschließt. Von der Probe kommendes Licht wird über eine Detektionsoptik mit einem Detektionsobjektiv 8, dessen optische Achsen 9 mit der Normalen der Bezugsfläche einen von Null verschiedenen Detektionswinkel δ einschließt, auf einen Detektor 10 abgebildet, der Detektor 10 wandelt die registrierte Intensität in weiterverarbeitbare Bilddaten um. Beleuchtungswinkel β und Detektionswinkel δ sind hier gleich, was jedoch nicht zwingend ist. Bei verschiedenen Aperturen der beiden Objektive beispielsweise können auch die Winkel aufgrund des räumlichen Platzbedarfs anders eingestellt sein.

Beleuchtungsobjektiv 6 und Detektionsobjektiv 8 sind unterhalb des Probengefäßes 1 angeordnet. Das Probengefäß 1 weist einen für Beleuchtungs- und Detektionslicht transparenten Gefäßboden 11 mit einer inneren Grenzfläche 12 und einer äußeren Grenzfläche 13 auf. Am Gefäßboden 11 ist mindestens eine für Beleuchtungs- und Detektionslicht transparente Senke 14 zur Ablage der Probe 3 in die Senke ausgebildet. Dabei ist es ausreichend, wenn das Probengefäß 1 im Bereich der Senke 14 transparent ist, jedoch ist die Herstellung aus einem einheitlichen Material wie Glas oder tiefgezogenem Kunststoff in der Regel einfacher. Die Ablagerung der Probe 3 in dieser Senke 14 führt dazu, dass die Probe 3 für die optische Anordnung des Lichtblattmikroskops, das Beleuchtungsobjektiv 6 und das Detektionsobjektiv 8 leichter zugänglich wird. Ein Probengefäß 1 mit einer Vielzahl solcher Senken 14 ist daher besser für eine Analyse einzelner Zellen mit hohem Durchsatz geeignet als ein Gefäß mit einem ebenen Boden, da durch die Ablagerung der Probe in der Senke die einzelnen Vertiefungen, über die eine solche *Multi-Well*-Platte oder Mikrotiterplatte verfügt, lateral mit kleineren Abmessungen konzipiert werden können. Die Mikrotiterplatten müssen dann nicht so oft gewechselt werden.

Dabei sind die Form der Senke 14, ihre Position bei der Beobachtung sowie die Lagen der optischen Achsen 7 und 9 von Beleuchtungsobjektiv 6 bzw. Detektionsobjektiv 8 aufeinander abgestimmt, indem diese optische Achsen 7, 9 des Beleuchtungsobjektivs 6 und des Detektionsobjektivs 8 mit den Normalen der inneren Grenzfläche 12 und der äußeren Grenzfläche 13 zumindest im Bereich des Durchtritts der optischen Achsen 7 und 9 durch die Grenzflächen 12 und 13 einen minimalen Winkel einschließen. Auf diese Weise kann das Auftreten von Aberrationen durch schrägen Lichteinfall bzw. schrägen Lichtaustritt durch die Grenzflächen minimiert werden. Der Winkel ist dabei bevorzugt Null.

Im in Fig.1 gezeigten Beispiel umfasst die mindestens eine Senke 14 ein erstes und ein zweites vom Gefäßboden 11 abstehendes plattenförmiges Element 15 bzw. 16. Bei jedem der plattenförmigen Elemente 15 und 16 ist die innere Grenzfläche 12 parallel zur äußeren Grenzfläche 13 angeordnet. An der tiefsten Stelle der Senke 14 stehen die beiden plattenförmigen Elemente 15 und 16 in mindestens einem Punk in Kontakt, wobei die Normalen der Grenzflächen 12, 13 des ersten plattenförmigen Elements 15 mit der optischen Achse 7 des Beleuchtungsobjektivs 6 und die Normalen der Grenzflächen 12, 13 des zweiten plattenförmigen Elements 16 mit der optischen Achse 9 des Detektionsobjektivs 8 zusammenfallen. Die Summe von Beleuchtungswinkel β und Detektionswinkel δ beträgt hier 90°, sie kann aber auch davon abweichen. Diese Anordnung hat den großen Vorteil, dass Aberrationen, wie sie bei schrägem Lichtdurchtritt durch die Grenzflächen 12, 13 auftreten, ganz vermieden werden können. Für das Beleuchtungsobjektiv 6, welches in der Regel eine kleine numerische Apertur in der Größenordnung von 0,3 aufweist, da das zu erzeugende Lichtblatt so dünn wie möglich sein sollte, sind weitere Korrekturen dann nicht mehr unbedingt notwendig. Für das Detektionsobjektiv 8, welches in der Regel eine hohe numerische Apertur in der Größenordnung von 1,0 aufweist, sind jedoch weitere Korrekturen vorteilhaft, in besonderen Fällen auch für die Beleuchtungsoptik. Die Korrekturmittel können beispielsweise Korrekturlinsen im Beleuchtungsobjektiv 6 oder im Detektionsobjektiv 8 umfassen oder auch adaptive optische Elemente zur Manipulation der Phasenfronten des Beleuchtungs- und / oder des Detektionslichtes, die im Beleuchtungsstrahlengang bzw. im Detektionsstrahlengang angeordnet sind und bevorzugt als verformbare Spiegel, räumliche Lichtmodulatoren oder Phasenplatten ausgestaltet sind.

Um Streuung und Brechung an den Grenzflächen 12, 13 ganz zu vermeiden, lässt sich der Gefäßboden 11 auch aus einem Material gestalten, welches einen Brechungsindex aufweist, der sich von dem Brechungsindex des Mediums 2, in welchem sich die Probe 3 befindet, um weniger als 5% unterscheidet. Hier geeignet sind besonders amorphe Polymere, die in ihrer Glasübergangstemperatur so eingestellt werden können, dass beim Erkalten das Material genau den gewünschten Brechungsindex aufweist. Auch ein nanostrukturiertes Mischmaterial, beispielsweise aus nanoporösem Siliziumdioxid, d.h. Siliziumdioxid mit einer Vielzahl von zylinderförmigen Durchlässen kann als Material für den Gefäßboden 11 verwendet werden. In jedem Falle sollte die Dicke des Gefäßbodens 11 so dünn wie möglich gewählt werden, um Aberrationen so gut wie möglich zu unterdrücken. Das in Fig.1 gezeigte Beispiel lässt sich in äquivalenter Weise auch für eine aufrechte Anordnung von Beleuchtungsobjektiv 6 und Detektionsobjektiv 8 übertragen, anstelle einer Senke 14 im Gefäßboden 11, weist hier der Gefäßdeckel eine entsprechende Erhebung auf.

In Fig.2 ist ein Beispiel für ein Probengefäß 1 gezeigt, welches für die Analyse von Zellen mit hohem Durchsatz geeignet ist. Gezeigt sind zwei parallel zu einander angeordnete, rinnenförmige Senken 14 in einem Ausschnitt eines Probengefäßes 1. Jede dieser Senken 14 ist durch Streben 17 in einzelne Vertiefungen unterteilt, die es möglich machen, mehrere Proben nebeneinander in einer Senke 14 anzuordnen, ohne dass eine gegenseitige Möglichkeit zur Kontaminierung besteht.

Anstelle des Gefäßbodens 11 kann auch ein entsprechender Gefäßdeckel auf diese Weise konzipiert werden. In Fig.3 ist ein Ausschnitt aus einem Gefäßdeckel 18 gezeigt, auf dem eine Vielzahl von pyramidenförmigen Erhebungen 19 angeordnet ist, jede dieser Erhebungen 19 deckt eine Vertiefung im Probengefäß 1 ab. Äquivalent kann auch der Gefäßboden 1 auf diese Weise ausgestaltet sein.

Die inneren Grenzflächen 13 in den Senken 14 bzw. Erhebungen 19 können zum Aufwachsen von Zellen auf dieser Grenzfläche funktionalisiert werden, so dass beispielsweise sich Zellen auch ohne weitere Hilfsmittel in den Erhebungen 19 anlagern können. Die Senke 14 oder die Erhebung 19 können auch mit einem Gel oder Alginat zur Immobilisierung der Probe gefüllt sein.

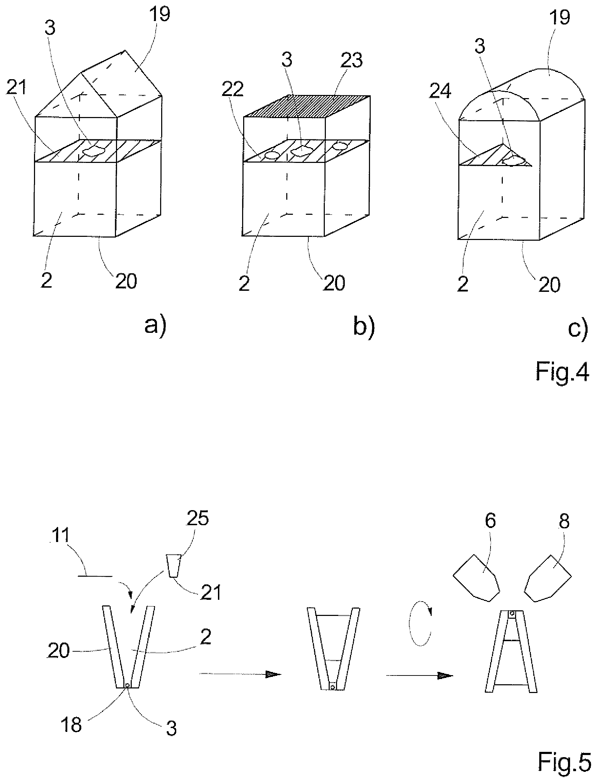

Um die Beobachtung der Proben zu erleichtern und die Vertiefungen einer Mikrotiterplatte möglichst mit geringem lateralen Durchmesser konzipieren zu können, weisen solche Probengefäße, die für die aufrechte Beobachtung vorgesehen sind, bevorzugt Mittel zur Positionierung der Probe im oberen Bereich des Probengefäßes 11, bezogen auf seine Tiefe, innerhalb des Arbeitsabstandes von Beleuchtungs- und Detektionsobjektiv, oder zur entsprechenden Positionierung innerhalb des Arbeitsabstandes in der Erhebung 19 im Gefäßdeckel 18 auf. Solche Mittel sind in den Figuren 4 a) - c) gezeigt. Das kastenförmige Element symbolisiert jeweils eine Vertiefung 20 einer *Multi-Well*-Platte in einem Probengefäß 1 für die aufrechte Beobachtung. In Fig.4 a) ist im oberen Bereich eine durchlässige Membran 21 angeordnet, auf der die Probe 3 gelagert ist und die den Kontakt zu einem vergleichsweise großen Volumen an Nährflüssigkeit sicherstellt, um das Wachstum der Zellen zu ermöglichen. Die Membran 21 ermöglicht sowohl die Diffusion von Nährstoffen, als auch eine Stützung der Probe 3. Anstelle einer Membran 21 kann auch eine beispielsweise ebene Plattform 22 mit Öffnungen verwendet werden, dies ist in Fig.4 b) gezeigt. Die Plattform kann beispielsweise aus Glas bestehen, wodurch die Probenpräparation im wesentlichen gemäß Standardprotokollen verlaufen kann. Die Zellkultur kann auch in einem Matrixgel immobilisiert sein. In Fig.4 a) ist auf der Vertiefung 20 eine Erhebung 19 eines Gefäßdeckels 18 in Form einer Rinne oder des Aufschnitts einer Rinne dargestellt. Auch die Verwendung einer flachen Abdeckung, beispielsweise einer Folie 23, wie in Fig.4 b) gezeigt, ist grundsätzlich denkbar. Die Folie 23 kann mit dem Probengefäß verklebt oder verschweißt werden. Eine weitere Konfiguration ist in Fig.4 c) gezeigt. Hier ist ein Steg 24 dargestellt, der in die Mitte der Vertiefung ragt. Die Erhebung 19 weist hier eine Halbtonnenform auf. Die genannten Stützelemente Membran 21, Plattform 22 und Steg 24 können auch aus Gel gefertigt sein, sofern dieses eine hinreichende Steifigkeit aufweist.

Auch die Verwendung von drehbaren Mikrotiterplatten ist denkbar, wie in Fig.5 gezeigt. Dabei wird zunächst die Probe 3 in einer - hier beispielhaft trichterförmigen - Vertiefung 20 der Mikrotiterplatte abgelegt. Die Vertiefung 20 ist mit dem Medium 2 gefüllt. Anschließend wird ein trichterförmiges Element 25, an dessen Ende mit kleinerem Durchmesser eine Membran 21 angeordnet ist, in die trichterförmige Vertiefung 20 eingesetzt. Sodann wird die Mikrotiterplatte mit dem Gefäßboden 11 verschlossen. Anschließend wird die Platte umgedreht, die Probe kann dann mit einer aufrechten Anordnung zur Lichtblattmikroskopie beobachtet werden.

### Bezuaszeichenliste

- 1: Probengefäß
- 2: Medium
- 3: Probe
- 4: Probentisch
- 5: Lichtquelle
- 6: Beleuchtungsobjektiv
- 7: optische Achse
- 8: Detektionsobjektiv
- 9: optische Achse
- 10: Detektor
- 11: Gefäßboden
- 12: innere Grenzfläche
- 13: äußere Grenzfläche
- 14: Senke
- 15: erstes plattenförmiges Element
- 16: zweites plattenförmiges Element
- 17: Strebe
- 18: Gefäßdeckel
- 19: Erhebung
- 20: Vertiefung
- 21: Membran
- 22: Plattform
- 23: Folie
- 24: Steg
- 25: trichterförmiges Element

## Patentansprüche

1. Anordnung zur Lichtblattmikroskopie, umfassend
- ein Probengefäß (1) zur Aufnahme einer in einem Medium (2) befindlichen Probe (3), wobei das Probengefäß (1) eine Abdeckung aufweist und hinsichtlich einer ebenen Bezugsfläche ausgerichtet ist,
- eine Beleuchtungsoptik mit einem Beleuchtungsobjektiv (6), die eingerichtet ist, die Probe (3) mit einem Lichtblatt zu beleuchten, wobei die optische Achse (7) des Beleuchtungsobjektivs (6) und das Lichtblatt in einer Ebene liegen, die mit der Normalen der Bezugsfläche einen von Null verschiedenen Beleuchtungswinkel β einschließt,
- eine Detektionsoptik mit einem Detektionsobjektiv (8), dessen optische Achse (9) mit der Normalen der Bezugsfläche einen von Null verschiedenen Detektionswinkel δ einschließt,
- an der Abdeckung mindestens eine für Beleuchtungs- und Detektionslicht transparente Auswölbung mit einer inneren Grenzfläche (12) und einer äußeren Grenzfläche (13) zur Aufnahme der Probe (3) in dieser Auswölbung ausgebildet ist,
- die Form der mindestens einen Auswölbung, ihre Position bei der Beobachtung sowie die Lage der optischen Achsen (7, 9) von Beleuchtungsobjektiv (6) und Detektionsobjektiv (9) aufeinander abgestimmt sind, indem die optischen Achsen (7, 9) mit den Normalen der Grenzflächen (12, 13) zumindest im Bereich des Durchtritts der optischen Achsen (7, 9) durch die Grenzflächen einen Winkel von 0° bis 5° einschließen, **dadurch gekennzeichnet dass**
- die mindestens eine Auswölbung zwei von der Abdeckung und vom Probengefäß abstehende plattenförmige Elemente (15, 16) mit parallelen Grenzflächen (12, 13) umfasst, welche an derjenigen Stelle der Auswölbung mit der größten Entfernung zum übrigen Probengefäß (1) in mindestens einem Punkt in Kontakt stehen, wobei die Normalen der Grenzflächen (12, 13) eines ersten plattenförmigen Elements (15) mit der optischen Achse (7) des Beleuchtungsobjektivs (6) und die Normalen der Grenzflächen (12, 13) eines zweiten plattenförmigen Elements (16) mit der optischen Achse (9) des Detektionsobjektivs (8) zusammenfallen, und wobei die Summe von Beleuchtungswinkel β und Detektionswinkel δ 90° beträgt.

2. Anordnung zur Lichtblattmikroskopie nach Anspruch 1, **dadurch gekennzeichnet, dass** die mindestens eine Auswölbung rinnen- oder pyramidenförmig ausgestaltet ist.

3. Anordnung zur Lichtblattmikroskopie nach Anspruch 1 oder 2, **dadurch gekennzeichnet, dass** die innere Grenzfläche (12) der mindestens einen Auswölbung zum Aufwachsen von Zellen funktionalisiert ist

4. Anordnung nach einem der Ansprüche 1 bis 3, **dadurch gekennzeichnet, dass** Beleuchtungsobjektiv (6) und Detektionsobjektiv (8) unterhalb des Probengefäßes (1) angeordnet sind, die Abdeckung als Gefäßboden (11) und die mindestens eine Auswölbung als Senke (14) ausgestaltet ist.

5. Anordnung zur Lichtblattmikroskopie nach Anspruch 4, **dadurch gekennzeichnet, dass** das Probengefäß (1) als Mikrotiterplatte mit einer Vielzahl von Vertiefungen ausgebildet ist, und an jeder Vertiefung eine pyramidenförmige Senke (14) ausgebildet ist, wobei die beiden plattenförmigen Elemente (15, 16) Dreiecksform haben und zwei weitere plattenförmige Elemente vorhanden sind, durch die die beiden plattenförmigen Elemente (15, 16) zur pyramidenförmigen Senke (14) ergänzt sind.

6. Anordnung nach einem der Ansprüche 4 oder 5, **dadurch gekennzeichnet, dass** die mindestens eine Senke (14) mit einem Gel oder Alginat gefüllt ist.

7. Anordnung zur Lichtblattmikroskopie nach einem der Ansprüche 1 bis 3, **dadurch gekennzeichnet, dass** Beleuchtungsobjektiv (6) und Detektionsobjektiv (8) oberhalb des Probengefäßes (1) angeordnet sind, die Abdeckung als Gefäßdeckel (18) ausgestaltet ist, die mindestens eine Auswölbung als Erhebung (19) ausgestaltet ist, und im Probengefäß (1) Mittel zur Positionierung der Probe (3) im oberen Bereich des Probengefäßes (1), bezogen auf seine Tiefe, innerhalb des Arbeitsabstandes von Beleuchtungsobjektiv (6) und Detektionsobjektiv (8) und / oder zu entsprechender Positionierung in der mindestens einen Erhebung (19) angeordnet sind.

8. Anordnung zur Lichtblattmikroskopie nach Anspruch 7, **dadurch gekennzeichnet, dass** das Probengefäß (1) als Mikrotiterplatte mit einer Vielzahl von pyramidenförmigen Erhebungen (19) im Gefäßdeckel (18) ausgebildet ist, wobei in jeder pyramidenförmigen Erhebung (19) die beiden plattenförmigen Elemente (15, 16) Dreiecksform haben und zwei weitere plattenförmige Elemente vorhanden sind, durch die die beiden plattenförmigen Elemente (15, 16) zur pyramidenförmigen Erhebung (19) ergänzt sind.

9. Anordnung zur Lichtblattmikroskopie nach Anspruch 8, **dadurch gekennzeichnet, dass** die Mikrotiterplatte drehbar ausgestaltet ist.

10. Anordnung zur Lichtblattmikroskopie nach einem der Ansprüche 7 bis 9, **dadurch gekennzeichnet, dass** die Mittel zur Positionierung der Probe (1) im oberen Bereich des Probengefäßes oder in der mindestens einen Erhebung (19) eine für Nährlösungen permeable Membran (21), eine Plattform (22) mit einer Vielzahl von Öffnungen, oder einen Steg (24) umfassen.

11. Anordnung zur Lichtblattmikroskopie nach Anspruch 10, **dadurch gekennzeichnet, dass** die Membran (21), die Plattform (22), oder der Steg (24) aus einem Gel sind.

12. Anordnung zur Lichtblattmikroskopie nach einem der Ansprüche 1 bis 11, **dadurch gekennzeichnet, dass** Beleuchtungsoptik und / oder die Detektionsoptik Korrekturmittel zur Verringerung von solchen Aberrationen umfasst, welche durch schrägen Durchtritt von Beleuchtungslicht und/oder zu detektierendem Licht durch die Grenzflächen entstehen.

13. Anordnung zur Lichtblattmikroskopie nach Anspruch 12 **dadurch gekennzeichnet, dass** die Korrekturmittel Korrekturlinsen im Beleuchtungsobjektiv (6) und / oder im Detektionsobjektiv (8), bevorzugt Zylinderlinsen, verkippte oder nicht axial angeordnete Linsen oder Korrekturelemente mit asphärischen Flächen oder mit Freiformflächen, umfassen, oder im Beleuchtungsstrahlengang und / oder im Detektionsstrahlengang angeordnete adaptive optische Elemente zur Manipulation der Phasenfronten des Beleuchtungs- und / oder des Detektionslichts, bevorzugt verformbare Spiegel, räumliche Lichtmodulatoren, oder Phasenplatten, umfassen.

14. Anordnung zur Lichtblattmikroskopie nach einem der Ansprüche 1 bis 13, **dadurch gekennzeichnet, dass** der Gefäßboden (11) und / oder der Gefäßdeckel (18) aus einem Material besteht, welches einen Brechungsindex aufweist, der sich von dem Brechungsindex eines Mediums (2), in welchem sich die Probe (3) befindet, um weniger als 5% unterscheidet.

15. Anordnung zur Lichtblattmikroskopie nach Anspruch 14, **dadurch gekennzeichnet, dass** das Material ein nanostrukturiertes Mischmaterial aus einer ersten und einer zweiten Komponente ist, wobei der Brechungsindex der ersten Komponente kleiner und der Brechungsindex der zweiten Komponente größer als der Brechungsindex des Mediums (2) ist, und wobei die mittleren Strukturgrößen der Bereiche aus Material der ersten Komponente einen mittleren Durchmesser aufweisen, der geringer als die Lichtwellenlängen des zur Beleuchtung verwendeten und des zu detektierenden Lichts ist.

## Claims

1. Arrangement for light sheet microscopy, comprising
- a sample vessel (1) for holding a sample (3) located in a medium (2), wherein the sample vessel (1) has a covering and is oriented with respect to a planar reference surface,
- an illumination optical unit having an illumination objective (6), which is configured to illuminate the sample (3) with a light sheet, wherein the optical axis (7) of the illumination objective (6) and the light sheet are situated in a plane that encloses an illumination angle β that differs from zero with the normal of the reference surface,
- a detection optical unit having a detection objective (8), the optical axis (9) of which encloses a detection angle δ that differs from zero with the normal of the reference surface,
- at least one protrusion, which is transparent for illumination and detection light and has an inner boundary surface (12) and an outer boundary surface (13) for holding a sample (3) in said protrusion, is formed on the cover,
- the shape of the at least one protrusion, the position thereof upon observation and the position of the optical axes (7, 9) of the illumination objective (6) and the detection objective (9) are adapted to one another by virtue of the fact that the optical axes (7, 9) enclose with the normals of the boundary surfaces (12, 13) an angle of 0° to 5° at least in the region where the optical axes (7, 9) penetrate the boundary surfaces, **characterized in that**
- the at least one protrusion comprises two plate-type elements (15, 16) which protrude from the cover and from the sample vessel, have parallel boundary surfaces (12, 13) and are in contact in at least one point at the location where the protrusion has the greatest distance from the remaining sample vessel (1), wherein the normals of the boundary surfaces (12, 13) of a first plate-type element (15) coincide with the optical axis (7) of the illumination objective (6) and the normals of the boundary surfaces (12, 13) of a second plate-type element (16) coincide with the optical axis (9) of the detection objective (8), and wherein the sum of the illumination angle β and the detection angle δ is 90°.

2. Arrangement for light sheet microscopy according to Claim 1, **characterized in that** the at least one protrusion is embodied in the form of a groove or a pyramid.

3. Arrangement for light sheet microscopy according to Claim 1 or 2, **characterized in that** the inner boundary surface (12) of the at least one protrusion is functionalized for growing cells.

4. Arrangement according to one of Claims 1 to 3, **characterized in that** the illumination objective (6) and the detection objective (8) are arranged below the sample vessel (1), the covering is embodied as a vessel bottom (11), and the at least one protrusion is embodied in the form of a depression (14).

5. Arrangement for light sheet microscopy according to Claim 4, **characterized in that** the sample vessel (1) is embodied as a microtitre plate having a multiplicity of wells, and a pyramid-shaped depression (14) is formed in each well, wherein the two plate-shaped elements (15, 16) are triangular and two further plate-shaped elements are present together with which the two plate-shaped elements (15, 16) form the pyramid-shaped depression (14).

6. Arrangement according to either of Claims 4 and 5, **characterized in that** the at least one depression (14) is filled with a gel or an alginate.

7. Arrangement for light sheet microscopy according to one of Claims 1 to 3, **characterized in that** the illumination objective (6) and the detection objective (8) are arranged above the sample vessel (1), the covering is embodied as a vessel cover (18), the at least one protrusion is embodied as an elevation (19), and means for positioning the sample (3) in the upper region of the sample vessel (1), with reference to its depth, within the working distance of the illumination objective (6) and the detection objective (8) and/or for correspondingly positioning it in the at least one elevation (19) are arranged in the sample vessel (1).

8. Arrangement for light sheet microscopy according to Claim 7, **characterized in that** the sample vessel (1) is embodied as a microtitre plate having a multiplicity of pyramid-shaped elevations (19) in the vessel cover (18), wherein in each pyramid-shaped elevation (19), the two plate-shaped elements (15, 16) are triangular and two further plate-shaped elements are present, together with which the two plate-shaped elements (15, 16) form the pyramid-shaped elevation (19).

9. Arrangement for light sheet microscopy according to Claim 8, **characterized in that** the microtitre plate has a rotatable design.

10. Arrangement for light sheet microscopy according to one of Claims 7 to 9, **characterized in that** the means for positioning the sample (1) in the upper region of the sample vessel or in the at least one elevation (19) comprise a membrane (21) that is permeable for nutrient solutions, a platform (22) having a multiplicity of openings or a web (24).

11. Arrangement for light sheet microscopy according to Claim 10, **characterized in that** the membrane (21), the platform (22) or the web (24) are made from a gel.

12. Arrangement for light sheet microscopy according to one of Claims 1 to 11, **characterized in that** the illumination optical unit and/or the detection optical unit comprises correction means for reducing aberrations that occur owing to the oblique passage of illumination light and/or of light that is to be detected through the boundary surfaces.

13. Arrangement for light sheet microscopy according to Claim 12, **characterized in that** the correction means comprise correction lenses in the illumination objective (6) and/or in the detection objective (8), preferably cylindrical lenses, lenses which are tilted or arranged in a non-axial manner or correction elements having aspherical surfaces or having freeform surfaces, or comprise adaptive optical elements, arranged in the illumination beam path and/or in the detection beam path, for manipulating the phase fronts of the illumination light and/or of the detection light, preferably deformable mirrors, spatial light modulators or phase plates.

14. Arrangement for light sheet microscopy according to one of Claims 1 to 13, **characterized in that** the vessel bottom (11) and/or the vessel cover (18) consists of a material having a refractive index that differs by less than 5% from the refractive index of the medium (2) in which the sample (3) is located.

15. Arrangement for light sheet microscopy according to Claim 14, **characterized in that** the material is a nanostructured mixed material from a first and a second component, wherein the refractive index of the first component is smaller and the refractive index of the second component is greater than the refractive index of the medium (2), and wherein the average structure sizes of the regions made of the material of the first component have an average diameter that is smaller than the light wavelengths of the light that is used for illumination and is to be detected.

## Revendications

1. Dispositif destiné à la microscopie à nappe de lumière, ledit dispositif comprenant
- un récipient à échantillon (1) destiné à recevoir un échantillon (3) placé dans un milieu (2), le récipient à échantillon (1) comportant un moyen de recouvrement et étant orienté par rapport à une surface de référence plane,
- une optique d'éclairage pourvue d'un objectif d'éclairage (6) et conçue pour éclairer l'échantillon (3) avec une nappe de lumière, l'axe optique (7) de l'objectif d'éclairage (6) et la nappe de lumière étant situés dans un plan qui forme la normale à la surface de référence un angle d'éclairage non nul β,
- une optique de détection pourvue d'un objectif de détection (8) dont l'axe optique (9) forme avec la normale à la surface de référence un angle de détection δ non nul,
- au moins un renflement transparent pour la lumière d'éclairage et la lumière de détection est formé sur le moyen de recouvrement, lequel renflement comporte une surface limite intérieure (12) et une surface limite extérieure (13) afin de recevoir l'échantillon (3) dans ce renflement ;
- la forme de l'au moins un renflement, sa position lors de l'observation et la position des axes optiques (7, 9) de l'objectif d'éclairage (6) et de l'objectif de détection (9) sont adaptés l'un à l'autre du fait que les axes optiques (7, 9) forment avec les normales aux surfaces limites (12, 13) au moins dans la région du passage des axes optiques (7, 9) à travers les surfaces limites un angle de 0° à 5°, **caractérisé en ce que**
- l'au moins un renflement comprend deux éléments (15, 16) en forme de plaque qui font saillie du moyen de recouvrement et du récipient à échantillon et qui comportent des surfaces limites parallèles (12, 13) qui sont en contact en au moins un point à l'emplacement du renflement se trouvant à la plus grande distance du reste du récipient à échantillon (1), les normales aux surfaces limites (12, 13) d'un premier élément (15) en forme de plaque coïncidant avec l'axe optique (7) de l'objectif d'éclairage (6) et les normales aux surfaces limites (12, 13) d'un deuxième élément (16) en forme de plaque coïncidant avec l'axe optique (9) de l'objectif de détection (8), et la somme de l'angle d'éclairage β et de l'angle de détection δ étant de 90°.

2. Dispositif destiné à la microscopie à nappe de lumière selon la revendication 1, **caractérisé en ce que** l'au moins un renflement est conçu en forme de goulotte ou de pyramide.

3. Dispositif destiné à la microscopie à nappe de lumière selon la revendication 1 ou 2, **caractérisé en ce que** la surface limite intérieure (12) de l'au moins un renflement est fonctionnalisée pour la croissance de cellules.

4. Dispositif selon l'une des revendications 1 à 3, **caractérisé en ce que** l'objectif d'éclairage (6) et l'objectif de détection (8) sont disposés au-dessous du récipient à échantillon (1), le moyen de recouvrement forme le fond de récipient (11) et l'au moins un renflement forme une dépression (14).

5. Dispositif destiné à la microscopie à nappe de lumière selon la revendication 4, **caractérisé en ce que** le récipient à échantillon (1) est conçu comme une plaque microtitre comprenant une pluralité d'évidements et une dépression (14) en forme de pyramide est formée au niveau de chaque évidement,
les deux éléments (15, 16) en forme de plaque ayant une forme triangulaire et deux autres éléments en forme de plaque étant prévus qui permettent d'ajouter les deux éléments (15, 16) en forme de plaque à la dépression pyramidale (14).

6. Dispositif selon l'une des revendications 4 et 5, **caractérisé en ce que** l'au moins une dépression (14) est remplie d'un gel ou d'alginate.

7. Dispositif destiné à la microscopie à nappe de lumière selon l'une des revendications 1 à 3, **caractérisé en ce que** l'objectif d'éclairage (6) et l'objectif de détection (8) sont disposés au-dessus du récipient à échantillon (1), le moyen de recouvrement est conçu comme un couvercle de récipient (18), l'au moins un renflement est conçu comme une élévation (19) et, dans le récipient à échantillon (1), des moyens de positionnement de l'échantillon (3) sont disposés dans la région supérieure du récipient à échantillon (1), en fonction de sa profondeur, à la distance de travail de l'objectif d'éclairage (6) et de l'objectif de détection (8) et/ou des moyens de positionnement appropriés sont disposés dans l'au moins une élévation (19).

8. Dispositif destiné à la microscopie à nappe de lumière selon la revendication 7, **caractérisé en ce que** le récipient à échantillon (1) est conçu comme une plaque microtitre pourvue d'une pluralité d'élévations pyramidales (19) dans le couvercle de récipient (18), dans chaque élévation pyramidale (19) les deux éléments (15, 16) en forme de plaque ayant une forme triangulaire et deux autres éléments en forme de plaque étant prévus qui permettent d'ajouter les deux éléments (15, 16) en forme de plaque à l'élévation pyramidale (19).

9. Dispositif destiné à la microscopie en nappe de lumière selon la revendication 8, **caractérisé en ce que** la plaque microtitre est conçue pour être rotative.

10. Dispositif destiné à la microscopie à nappe de lumière selon l'une des revendications 7 à 9, **caractérisé en ce que** les moyens de positionnement de l'échantillon (1) comprennent, dans la région supérieure du récipient à échantillon ou dans l'au moins une élévation (19), une membrane (21) perméable à des solutions nutritives, une plate-forme (22) pourvue d'une pluralité d'ouvertures ou une nervure (24).

11. Dispositif destiné à la microscopie à nappe de lumière selon la revendication 10, **caractérisé en ce que** la membrane (21), la plate-forme (22) ou la nervure (24) sont formées à partir d'un gel.

12. Dispositif destiné à la microscopie à nappe de lumière selon l'une des revendications 1 à 11, **caractérisé en ce que** l'optique d'éclairage et/ou l'optique de détection comprennent des moyens de correction destinés à réduire des aberrations dues au passage oblique de la lumière d'éclairage et/ou de la lumière à détecter à travers les surfaces limites.

13. Dispositif destiné à la microscopie à nappe de lumière selon la revendication 12, **caractérisé en ce que** les moyens de correction comprennent des lentilles de correction situées dans l'objectif d'éclairage (6) et/ou dans l'objectif de détection (8), de préférence des lentilles cylindriques, des lentilles inclinées ou non disposées axialement ou des éléments de correction à surfaces asphériques ou à surfaces libres, ou des éléments optiques adaptatifs disposés dans le trajet de faisceau d'éclairage et/ou dans le trajet de détection et destinés à manipuler les fronts de phase de la lumière d'éclairage et/ou de la lumière de détection, de préférence des miroirs déformables, des modulateurs de lumière spatiaux ou des plaques de phase.

14. Dispositif destiné à la microscopie à nappe de lumière selon l'une des revendications 1 à 13, **caractérisé en ce que** le fond de récipient (11) et/ou le couvercle de récipient (18) est formé d'un matériau qui a un indice de réfraction qui diffère de l'indice de réfraction d'un milieu (2), dans lequel se trouve l'échantillon (3), de moins de 5 %.

15. Dispositif destiné à la microscopie à nappe de lumière selon la revendication 14, **caractérisé en ce que** le matériau est un matériau mixte nano-structuré formé d'un premier composant et d'un deuxième composant, l'indice de réfraction du premier composant étant inférieur, et l'indice de réfraction du deuxième composant étant supérieur, à l'indice de réfraction du milieu (2), et les dimensions de structure moyennes des régions en matériau du premier composant ayant un diamètre moyen inférieur aux longueurs d'onde de la lumière utilisée pour l'éclairage et de la lumière à détecter.
